# EUROPÄISCHE PATENTSCHRIFT

(11) **EP 4 111 549 B1**
(45) Veröffentlichungstag und Bekanntmachung des Hinweises auf die Patenterteilung: **13.09.2023**
(21) Anmeldenummer: 21742690.7
(22) Anmeldetag: 18.05.2021
(51) Int. Cl.: H01R 13/453, H02G 3/18, E05B 47/06, H01R 24/70, H01R 25/00, H02G 3/14

(54) **INSTALLATIONSELEMENT**
INSTALLATION ELEMENT
ÉLÉMENT D'INSTALLATION

(30) Priorität: 18.05.2020 DE 102020002945
(43) Veröffentlichungstag der Anmeldung: 04.01.2023
(73) Patentinhaber: KK Technologie GmbH & Co. KG, 56477 Rennerod (DE)
(72) Erfinder: Kalkus,Berthold, 56477 Rennerod (DE); Konrad, Michael, 35759 Driedorf-Hohenrod (DE)
(74) Vertreter: Castell, Klaus
(86) Internationale Anmeldenummer: PCT/DE2021/000094
(87) Internationale Veröffentlichungsnummer: WO 2021/233491

(56) Entgegenhaltungen:
- CN-U- 210 272 793
- DE-A1-102012 025 533
- DE-U1-202015 103 222
- KR-B1- 100 771 211
- US-A1- 2014 273 563
- US-A1- 2016 156 123
- US-B1- 9 300 120

## Beschreibung

Die Erfindung betrifft ein Installationselement für elektrische Anschlüsse mit einem Basisgehäuse, in dem mindestens eine elektrische Steckdose angeordnet ist, und einem Außengehäuse, das mindestens eine Durchlassöffnung aufweist, wobei zwischen dem Außengehäuse und dem Basisgehäuse eine drehbare Verschlussmechanik angeordnet ist.

Der Erfindung liegen elektromechanische Baugruppen zu Grunde, die ihren Einsatz vorwiegend im Bereich der Büro- und Küchenelektrifizierung finden. Dabei handelt es sich um Einfach- oder Mehrfachsteckdosen, die in der Arbeitsfläche eingelassen sind. Vorzugsweise werden bei den nicht benutzten Steckdoseneinheiten die Bereiche der Steckdosen abgedeckt oder verschlossen. Im Falle einer Nutzung der Steckdosen werden durch Niederdrücken einer mechanischen Baugruppenanordnung die Bereiche der Steckdosen freigegeben. Auch ist es üblich durch Anheben oder seitliches Verschieben oder Verdrehen der Abdeckung die Eingriffsbereiche der Steckdosen freizugeben.

Die DE 10 2014 102959.3 A1 beschreibt eine Variante, bei der der Steckdoseneinsatz mit den Steckplätzen so vorgesehen ist, dass das Innengehäuse um mindestens 180° um seine Längsachse drehbar angeordnet ist. Um die Freistellung der Steckdosenplätze zu erreichen muss der Innere Teil des Gehäuses mit den Fingern an seinen Außenkanten in die Baugruppe eingedrückt werden. Hierbei wird eine Herzkurven-Verrastung gegen die Vorspannung einer Drehfeder ausgelöst und das Innenteil kann in die Bedienposition drehen. Beim Schließen muss nun das Innengehäuse von Hand gegen den Druck der Drehfeder und des Dämpfungsgliedes um 180° in die Verschlussposition gedrückt und in die Herzkurven-Verrastung eingerastet werden.

Die DE 10 2007 063 585.2 A1 beschreibt eine elektrische Steckdose mit einem Gerätesockel auf der Frontseite, in dessen Oberfläche ein Verschluss, nach dem Blendenprinzip eines Fotoapparates, integriert ist. Der Verschluss besteht aus mehreren Verschlusselementen die durch Festlager geführt, radial ein- und auswärts bewegbar sind. Das Verschließen und Öffnen erfolgt durch das Betätigen eines Drehringes an der Frontseite des Steckdosengehäuses.

Die DE 10 2012 025 533.0 A1 beschreibt eine Steckdosenanordnung mit folgender Funktion. Der Verschluss wird mittels eines Betätigungsknopfes, der zentrisch angeordnet ist, mit dem Finger gegen den Druck der Rückhaltefeder in das Steckdosengehäuse hineingedrückt. Hierbei taucht der Betätigungsknopf in die Abdeckung ein und entriegelt die Abdeckung und muss in dieser Lage mit dem Finger gehalten werden. Nun kann die Abdeckung, die drehbar auf dem Basisgehäuse gelagert ist, von Hand gedreht werden - bei gleichzeitigem Niederdrücken des Verschlusses - und öffnet somit den Zugang zu den Steckdosen. Ebenso erfolgt das Verschließen der Steckdosen mit umgekehrter Drehrichtung der Abdeckung.

Auch in der DE 10 2018 009 948.3 A1 und der CN 210 272 793 U wird durch Niederdrücken eines Bedienelementes gegen die Druckkraft einer Druckfeder der zentral angeordnete Betätigungsknopf in das Gehäuse eingeschoben. Durch dieses Niederdrücken mit einem Finger, muss eine im Innern angeordnete Verriegelung entriegelt werden, damit sich der Verschluss drehen kann. Gleichzeitig werden mit dem Herunterdrücken des Betätigungsknopfes eine Schaltfeder auf einen Schalttaster aufgeschoben und somit ein Stromkreis geschlossen, der dann einen Elektromotor rotieren lässt. Der Elektromotor bewirkt somit nur eine rotatorische Bewegung.

Weitere Ausführungsbeispiele dieser Patentanmeldung beziehen sich alle auf einen zentral angeordneten Betätigungsknopf, der jeweils mit dem Finger in das Gehäuse eingeschoben werden muss, um den Verschluss zu öffnen.

Allen technischen Lösungen ist zu Eigen, dass die mechanischen Elemente durch Drehen von Hand oder durch Niederdrücken mit dem Finger eines Betätigungselementes den Zugang zur Steckdose ermöglichen. Grundsätzlich bedarf es hier einer mehr oder weniger geschicklichen Handhabung der Bedienelemente, um den gewünschten Vorgang auszulösen. Auch sind die Produkte durch die Spaltmaße bei der Anordnung der Bedienelemente einer höheren Verschmutzung ausgesetzt. Der Verschmutzungsgrad kann sich nachteilig auf die Funktion des Bedienelementes auswirken und zu Fehlfunktionen führen. Ebenso ist die unterschiedliche Kraftbeaufschlagung auf das Bedienelement durch unterschiedliche Bedienpersonen nachteilig für einen ordnungsgemäßen Ablauf der mechanischen Abfolge.

Nicht ganz zu vernachlässigen ist die Bedienerfreundlichkeit, die durch ein Eingreifen in das Gehäuse nachteilig bestimmt wird. Insbesondere dann, wenn das Bedienelement gegen einen Federdruck in ein Gehäuse eingeschoben werden muss und dabei eventuell längere Fingernägel zu Schaden kommen oder eine Klemmwirkung des Bedienelementes auf den Finger ausgeübt werden kann.

Eine ähnliche Einrichtung zeigt auch die US 2014/273563 A1.

Der Erfindung liegt daher die Aufgabe zu Grunde, ein gattungsgemäßes Steckdosenelement zu entwickeln, das es ermöglicht, den Verschluss zu öffnen und zu schließen, ohne dass dabei mechanische Bedienelemente von Hand oder mit den Fingern betätigt werden müssen.

Die Erfindung wird durch die Merkmale des Hauptanspruchs gelöst. Ausführungsformen und Weiterbildungen sind Gegenstand der sich an den Hauptanspruch anschließenden weiteren Ansprüche.

Es wird ein Installationselement für elektrische Anschlüsse, insbesondere Steckdosen unterschiedlicher Bauart, sowie USB- oder andere Anschlüsse, offenbart. Dieses ist insbesondere ein Steckdosenelement. Das Steckdosenelement weist ein Außengehäuse mit Öffnungen sowie ein unter dem Außengehäuse angebrachtes Basisgehäuse mit mehreren Steckdosen auf. Es werden im Folgenden unterschiedliche Möglichkeiten der erfindungsgemäßen Wirkweise einer Abdeckung der Steckdosen beschrieben.

Das Außengehäuse ist mit dem Basisgehäuse fest verbunden. Im Außengehäuse befinden sich ein oder mehrere Öffnungen, die den Zugang zu den Steckdosen ermöglichen sollen. Diese Einstecklöcher sind größenangepasst für die Abnehmer bzw. Stecker von Verbrauchern und äquivalent in der Anzahl der im Steckdosenelement verbauten Steckdosen. Wobei auch mehrere Steckdosen einer Öffnung zugeordnet werden können.

Des Weiteren weist das Steckdosenelement einen drehbaren Verschluss auf, mit dem die oben genannten Öffnungen des Außengehäuses geöffnet oder geschlossen werden können. Der drehbare Verschluss ist zwischen dem Außengehäuse und dem Basisgehäuse angeordnet und ist eine Drehscheibe. Alternativ zu der Drehscheibe kann der drehbare Verschluss in jeder anderen Ausformung ausgebildet sein, beispielsweise als Drehflügel, Drehknochen oder dergleichen.

Der Verschluss ist drehbar im Basisgehäuse so angeordnet, dass im feststehenden Basisgehäuse die einzelnen Steckdosenvorrichtungen exakt korrespondierend zu den entsprechenden Öffnungen des Außengehäuses positioniert sind, so dass nach dem Öffnen des Verschlusses die entsprechenden Stecker bzw. Anschlüsse der Verbraucher in die Steckdosen einführbar sind. Das Außengehäuse und das Basisgehäuse sind miteinander fixiert, so dass lediglich die Verschlussmechanik drehbar ist.

Um eine ebene Oberfläche im geschlossenen Zustand des Steckdosenelementes zu erzeugen ist der Verschluss komplementär zu den Öffnungen des Außengehäuses durchgeprägt und taucht im geschlossenen Zustand mit den Durchprägungen in das Außengehäuse von innen nach außen ein. Somit sind die Öffnungen des Außengehäuses plan abgedeckt.

Die Drehbarkeit der Verschlussmechanik kann durch unterschiedlich erzeugte Steuersignale initiiert werden und durch jeweils unterschiedliche Drehmechanismen erfolgen. Hierbei liegt der Erfindung eine einheitliche Abfolge von mechatronischen Wirkprinzipien zu Grunde, die eine Drehbarkeit des Verschlusses gewährleisten, ohne eine mechanische Betätigung von Hand ausführen zu müssen.

Bei einem ersten Ausführungsbeispiel kann ein Steuersignal durch einen Berührungssensor nach folgenden Prinzipien erzeugt werden. Der Sensor ist auf einer Platine angeordnet, die mittels einer Leitungsverbindung mit dem aus Metall bestehendem Außengehäuse verbunden wird. Durch das Berühren der Metalloberfläche des Außengehäuses, an einer beliebigen Stelle, mit dem Finger oder der Handfläche wird eine Feldveränderung bewirkt. Diese Feldveränderung wird durch einen IC-Schaltkreis auf der Platine erkannt und in ein Steuersignal umgewandelt.

Ein zweites Ausführungsbeispiel benutzt einen elektrischen Feldsensor, der an einer definierten Stelle im Basisgehäuse positioniert wird, wobei komplementär auf dem Außengehäuse eine Markierung gesetzt wird, die sich über dem elektrischen Feldsensor befindet. Dadurch kann berührungslos durch einfaches, mit leichtem Abstand, hinwegführen der Hand eine Feldveränderung erzeugt werden. Diese Feldveränderung wird ebenso wie im ersten Ausführungsbeispiel in ein Steuersignal umgewandelt. Der Unterschied zum ersten Ausführungsbeispiel ist, dass die Hand das Außengehäuse nicht berühren muss, sondern nur in die Nähe eines definierten Bereiches gebracht werden muss.

Auch optisch kann ein Steuersignal erzeugt werden. Hierzu wird im Außengehäuse eine Ausnehmung angebracht und mit einem lichtdurchlässigen Material verschlossen. Die Ausnehmung kann auch eine Materialschwächung sein, die einen Lichtdurchlass durch das Material ermöglicht. Unterhalb dieser Ausnehmung wird ein Lichtsensor platziert der einen plötzlichen hell-dunkel Wechsel registriert und über ein IC-Glied ein Steuersignal erzeugt. Der plötzlichen hell-dunkel Wechsel wird mittels eines Fingers, der über die verschlossene Ausnehmung geführt wird, erzeugt. Auch ist denkbar das eine Linsenkalotte, die die Ausnehmung im Außengehäuse in Lichtkorridore aufteilt, einen hell-dunkel Wechsel registriert und mittels einer Auswertelektronik ein Steuersignal erzeugt.

Ebenso besteht die Möglichkeit durch eine vorgegebene Akustik ein Steuersignal zu erzeugen. In diesem Fall würde eine Platine mit einem Voice-Modul, die über ein Mikrophon und einem IC-Prozessor verfügt, das akustische Signal, wie z.B. "Auf" oder "Zu", die phonetische Klangbildung beider Begriffe abspeichern und durch Vergleiche den analogen Klangbildern einen digitalen Wert zuweisen, der mittels IC-Schaltkreis ein Steuersignal bildet.

In abgewandelter Form kann auch die "smart home Technologie" angewandt werden, indem ein Aktor, der koppelbar mit den smart home Systemen ist, in das Basisgehäuse integriert wird und die smart home Befehle, meist ein Infrarotsignal oder ein Funksignal, empfängt und in ein Steuersignal wandelt. Somit ist das Steckdosenelement auch in ein smart home System einbindbar.

Allen vorgenannten, nicht mechanisch zu betätigenden Elementen ist es zu eigen, dass ein Steuersignal erzeugt wird und dieses an die Steuerelektronik der Antriebseinheit gesendet und dort verwertet werden kann.

Die Aufgabe der Antriebseinheit ist es, den Verschluss in einer Linearbewegung unter das Außengehäuse zu befördern bis die Oberfläche der Ausprägung des Verschlusses unterhalb der Innenfläche des Außengehäuses abgesunken ist und dann durch eine Rotationsbewegung den Verschluss aus dem Wirkbereich der Öffnungen für die Steckerzuführung herauszudrehen. Somit öffnet der Verschluss die Zugänglichkeit der Steckdosen. In der reversiblen Anwendung des Verschlusses dreht die Antriebseinheit den Verschluss mittels einer Rotationsbewegung in die komplementäre Stellung der Ausprägungen des Verschlusses zu den Öffnungen des Außengehäuses und schiebt den Verschluss durch eine Linearbewegung aufwärts mit den Ausprägungen in die Öffnungen des Außengehäuses bis eine plane Gesamtoberfläche des Außengehäuses erzeugt wird. Hierdurch werden die Öffnungen für die Steckdosen wieder verschlossen.

Diese Kombination aus linearer und rotierender Bewegung der Antriebseinheit kann auf unterschiedliche Art und Weise durchgeführt werden.

Eine Möglichkeit einer Antriebseinheit besteht aus einem Gleichstrom-Elektromotor, der aus dem Stromkreislauf innerhalb des Steckdosenelementes gespeist wird. Der Elektromotor ist fix im Basisgehäuse angeordnet und besitzt zwischen Antriebswelle und drehbarem Verschlusselement ein Bewegungsgetriebe. Das Bewegungsgetriebe besteht aus einem Antriebsdrehteil, das mit der Achse des Elektromotors fest verbunden ist und eine Bewegungshülse die fest mit dem Verschluss verbunden ist. Das Antriebsdrehteil ist mit diametral angeordneten Zapfen ausgeformt, die über die zylinderförmige Oberfläche des Antriebsdrehteiles hervorragen. Die Bewegungshülse ist mit Helixausformungen versehen, die von der Zylinderaußenfläche die Wandung der Bewegungshülse zur Achsmitte hin durchdringen. Die Zapfen des Antriebsdrehteils sind komplementär zu den Helixausformungen der Bewegungshülse angeordnet und greifen in die Helixausformungen ein und stellen eine bewegliche Achsverbindung zum Verschluss her.

Der Verschluss liegt in seiner geschlossenen Position an einer Stützwandung an, die verhindert, dass der Verschluss sich bei einer Rotationsbeaufschlagung drehen kann.

Wenn die Achse des Elektromotors rotiert, rotiert gleichermaßen das Antriebsteil mit seinen ausgeformten Zapfen in der Bewegungshülse. Die Zapfen drücken auf die Laufbahn der Helixausformungen der Bewegungshülse und ziehen den Verschluss linear in das Steckdosenelement hinein. Die Stützwandung und die Helixausformungen sind so abgestimmt, dass bei Erreichen einer ausreichenden linearen Absenkung des Verschlusses das Führungsende der Stützwandung erreicht wird und die Bewegungshülse durch die rotierenden Zapfen des Antriebdrehteiles nun ebenso rotieren kann. Hierdurch wird der Verschluss aus dem Wirkbereich der Öffnungen für die Steckerzuführung herausgedreht. Somit öffnet der Verschluss die Zugänglichkeit der Steckdosen. Der Verschluss wird bei Erreichen seiner Öffnungslage durch Anschlagrippen in seiner Rotation zum Stillstand gebracht, wobei jetzt ein Stromanstieg im Elektromotor erfolgt und die Steuerungselektronik die Stromzuführung für den Motor abschaltet und die Umpolung des Elektromotors auslöst.

Beim Schließvorgang wird zuerst die Bewegungshülse durch das Antriebsdrehteil, das nun mit umgedrehter Drehrichtung rotiert, in Rotation versetzt und der Verschluss wird mit gegenläufiger Drehrichtung gegen eine Anschlagrippe gedreht. Der Elektromotor mit seinem Antriebsdrehteil dreht weiter und schiebt den Verschluss über die Zapfen in der Helixausformung die Bewegungshülse linear nach außen so, dass der Verschluss gegen die Innenseite des Außengehäuses anschlägt. Durch Erreichen des Anschlags erfolgt wiederum eine erhöhte Stromaufnahme und der Strom wird durch die Steuerelektronik ausgeschaltet und der Elektromotor umgepolt.

Ein weiteres Ausführungsbeispiel ähnelt dem zuvor beschriebenen Ausführungsbeispiel, wobei auch hier ein Antriebsdrehteil und eine Bewegungshülse in gleicher Weise angeordnet sind. Im Gegensatz zum ersten Ausführungsbeispiel entfallen bei dem Antriebsdrehteil die Zapfenausformungen und bei der Bewegungshülse die Helixausformung. Diese werden bei dem Antriebsdrehteil durch ein Außengewinde und bei der Bewegungshülse durch ein Innengewinde ersetzt.

Nun wird durch das Drehen der Antriebsachse des Elektromotors das Antriebsdrehteil in die Bewegungshülse eingedreht wobei der Verschluss durch die Stützwand zunächst nicht in Rotation versetzt werden kann und die Bewegungshülse den Verschluss in das Innere des Gehäuses zieht. Bei Erreichen einer ausreichenden linearen Absenkung des Verschlusses wird auch das Führungsende der Stützwandung erreicht und die Bewegungshülse wird nun in Rotation versetzt. Ebenso wie bei dem zuerst beschriebenen Ausführungsbeispiel wird die Rotation des Verschlusses durch eine Anschlagrippe gestoppt und in gleicher Weise die Stromzufuhr des Elektromotors unterbrochen und der Elektromotor umgepolt. Durch die höhere Stromzufuhr wird die Bewegungshülse mit einem Haltemoment auf das Antriebsdrehteil angezogen.

Beim Schließvorgang dreht der Verschluss in entgegengesetzter Drehrichtung und läuft ebenso gegen die Anschlagsrippe. Durch den Anschlag erfolgt eine höhere Stromaufnahme und es löst sich das Haltemoment und das Antriebsdrehteil dreht sich aus der Bewegungshülse, die hierdurch linear mit dem Verschluss nach oben gegen die Innenseite des Außengehäuses gedrückt wird. Durch Erreichen des Anschlags erfolgt wiederum eine Erhöhung der Stromaufnahme und der Strom wird durch die Steuerelektronik ausgeschaltet und der Elektromotor umgepolt.

Alternativ ist folgende Antriebseinheit umsetzbar: Der Elektromotor besitzt eine axial bewegliche Stahlachse, die von den Wicklungen des Elektromotors umgeben ist. Die Achse ist federnd im Elektromotor gelagert und ist an dem außenliegenden Ende fest mit dem Verschluss verbunden. Wenn der Motor über das Steuersignal eingeschaltet wird, bewegt sich durch die magnetische Wirkung der Wicklungen auf die Stahlachse des Elektromotors die Stahlachse gegen die Federwirkung linear in den Motor hinein und somit wird der fest verbundene Verschluss linear in das Basisgehäuse hineingezogen. Mit Erreichen des unteren Totpunktes der Achse beginnt der Elektromotor die Achse zu drehen und der Verschluss rotiert in seine geöffnete Endlage. Wie schon oben erwähnt, erfolgt durch den Anschlag ein Stromanstieg, der den Motor abschaltet und umpolt. Ebenso dreht der Elektromotor beim Schließen des Verschlusses den Verschluss in die Endlage der Verschlussposition gegen eine Anschlagrippe. Durch den Stromanstieg wird der Elektromotor abgeschaltet und umgepolt. Durch die Abschaltung wird auch das Magnetfeld abgeschaltet und der Verschluss wird durch die Druckfeder im Elektromotor mittels der Stahlachse linear in das Außengehäuse gedrückt und somit das Steckdosenelement verschlossen.

Nachfolgend werden Ausführungsbeispiele der erfindungsgemäßen Lösung anhand der beigefügten schematischen Zeichnungen näher erläutert. Es zeigt
- Figur 1: ein Installations- bzw. Steckdosenelement in geschlossenem Zustand in isometrischer Ansicht,
- Figur 2: ein Installations- bzw. Steckdosenelement in geöffnetem Zustand in isometrischer Ansicht,
- Figur 3: das Außengehäuse in einer isometrischen Ansicht mit beiden Öffnungslöchern,
- Figur 4: ein Basisgehäuse in isometrischer Ansicht,
- Figur 5: das Basisgehäuse ohne Außengehäuse mit Verschluss in geschlossener Position in der Draufsicht,
- Figur 6: das Basisgehäuse ohne Außengehäuse mit Verschluss in geöffneter Position in der Draufsicht,
- Figur 7: eine Verschlussbaugruppe in einer Seitenansicht beispielhaft mit Bewegungshülse, Antriebsdrehteil und Antriebselement,
- Figur 8: eine Sensorplatine in einer isometrischen Ansicht als Einzelteil,
- Figur 9: den Verschluss in einer isometrischen Ansicht als Einzelteil,
- Figur 10: die Verschlussbaugruppe in einer Schnittansicht beispielhaft mit Bewegungshülse, Antriebsdrehteil und Antriebselement,
- Figur 11: die Bewegungshülse mit Schraubgewinde in einer Seitenansicht,
- Figur 12: das Antriebsdrehteil mit Gewinde in einer Seitenansicht,
- Figur 13: eine Verschlussbaugruppe mit Helixausformung in einer Seitenansicht beispielhaft mit Bewegungshülse, Antriebsdrehteil und Antriebselement,
- Figur 14: die Bewegungshülse mit Helixausformung in einer Seitenansicht,
- Figur 15: das Antriebsdrehteil mit Helixausformung in einer Seitenansicht,
- Figur 16: eine Verschlussbaugruppe in einer Seitenansicht beispielhaft in einer Kombination aus Hubmagnet und Drehmagnet,
- Figur 17: die Verschlussbaugruppe aus Hubmagnet und Drehmagnet in einer Explosionsdarstellung,
- Figur 18: beispielhaft ein Steckdosenelement in einer Explosionsdarstellung,
- Figur 19: einen Halbschnitt mitten durch das Steckdosenelement in geschlossener Form,
- Figur 20: einen Halbschnitt mitten durch das Steckdosenelement mit abgesenktem Verschluss,
- Figur 21: einen Halbschnitt mitten durch das Steckdosenelement mit zwei eingesteckten Steckern,
- Figur 22: einen Stegdoseneinsatz im Halbschnitt,
- Figur 23: die Vorbaugruppe Außengehäuse mit 4x Befestigungswinkel in einer isometrischen Ansicht und
- Figur 24: die Außengehäusebefestigung in einer geschnittenen Detailansicht.

Im Folgenden werden die Einzelteile und die Baugruppendarstellungen mit Bezug auf die Figuren näher erläutert.

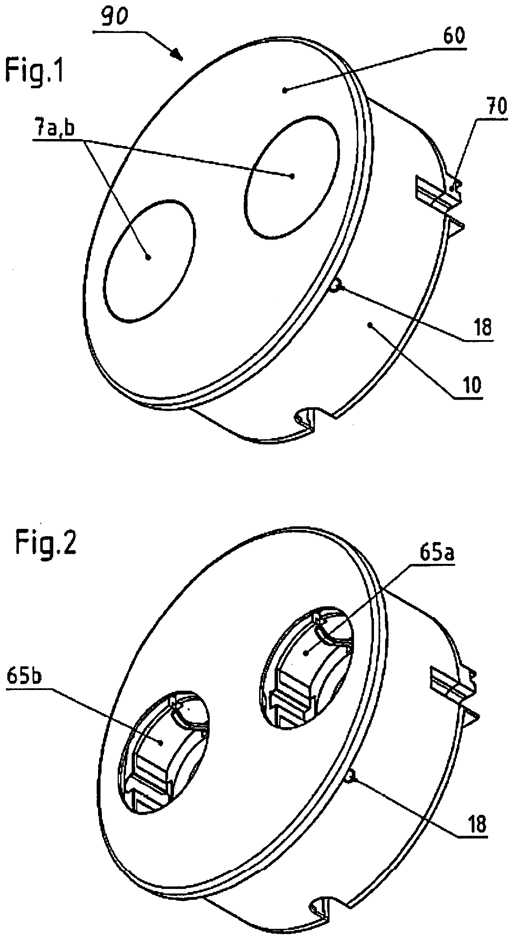

In Figur 1 ist ein Installations-bzw. Steckdosenelement als komplette Baugruppe in einer isometrischen Ansicht dargestellt. Das Steckdosenelement zeigt den Verschluss 1 in einer verschlossenen Position, wobei die Ausprägungen 7 (a, b) des Verschlusses 1 eine plane Oberfläche zu der Oberfläche des Außengehäuses 60 bilden. Das Außengehäuse 60 ist auf dem Basisgehäuse 10 fest fixiert und wird mit einem Gehäuseboden 70 von unten geschlossen. Die Gesamtbaugruppe weist keine mechanischen Betätigungselemente auf, die durch ein Niederdrücken oder ein Herausführen der Betätigungselemente von Hand das Öffnen oder Verschließen des Steckdosenelementes einleiten.

In Figur 2 ist das Installations- bzw. Steckdosenelement als komplette Baugruppe in einer isometrischen Ansicht dargestellt. Das Steckdosenelement wird in einer geöffneten Position gezeigt, wobei die Öffnungen 61 (a, b) des Außengehäuses 60 einen freien Zugriff auf die Steckdoseneinsätze 65 (a, b) gewähren. Der Oberflächenrand 62 (a, b) ist die äußere nach oben gerichtete Begrenzung der Steckdosengeometrie und definiert unter anderem die Höhe der Ausprägung 7 (a, b) des Verschlusses 1, damit eine plane Gesamtfläche im geschlossenen Zustand erreicht wird.

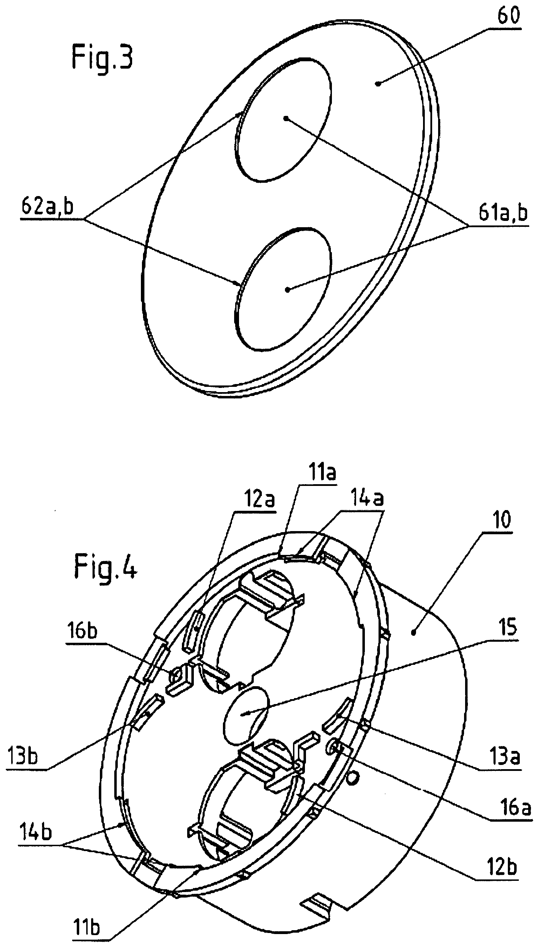

Die Figur 3 zeigt das Außengehäuse 60 als Einzelteil mit den Öffnungen 61 (a, b) und den Öffnungsrändern 62 (a, b).

In der Figur 4 ist das Basisgehäuse 10 als Einzelteil in einer isometrischen Ansicht dargestellt. Die obere Grundfläche zeigt die Anschlagsrippen für die Drehbegrenzung des Verschlusses 1. Die Anschlagsflächen 11 (a, b) sind die seitlichen Flächen der Führungsrippe 14 (a, b) und führen den Verschluss 1 bei der linearen Abwärtsbewegung. Die Anschlagsrippen 12 (a, b) und 13 (a, b) begrenzen den Verschluss 1 in seiner Drehbewegung wobei die Drehbewegung des Verschlusses beim Öffnen durch die Rippenpaarung 13 (a, b) und die Drehbewegung des Verschluss 1 beim Schließen durch die Rippenpaarung 12 (a, b) begrenzt wird. Zentrisch angeordnet ist eine Führungsausnehmung 15 in der die Bewegungshülsen gelagert werden. Die Durchgangslöcher 16 (a, b) sind zum Zwecke der Kabelführung an das Außengehäuse 60 vorgesehen.

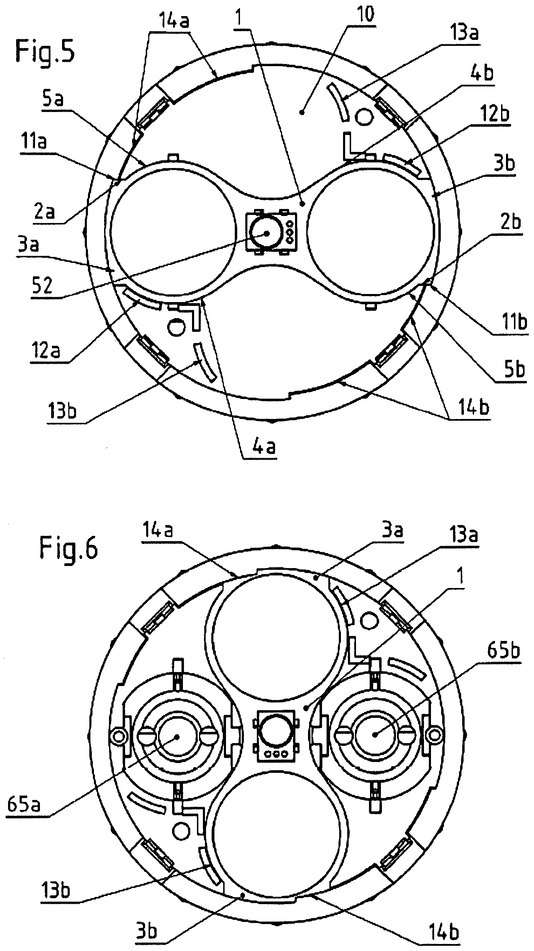

In der Figur 5 ist das Steckdosenelement mit dem Verschluss 1 und ohne Außengehäuse 60 in der geschlossenen Position in einer Draufsicht dargestellt. Der Verschluss 1 liegt mit seinen Anschlagflächen 4 (a, b) an den Anschlagrippen 12 (a, b) an, sodass die Anschlagsflächen 2 (a, b) des Verschlusses 1 den Anschlagsflächen 11 (a, b) des Basisgehäuses 10 mit geringem Spaltmaß gegenüber liegen. Die Führungsflächen 3 (a, b) des Verschlusses 1 liegen frei im Basisgehäuse 10. In der Mitte des Verschlusses ist beispielhaft eine Sensorplatine 52 angeordnet.

In der Figur 6 ist das Steckdosenelement mit dem Verschluss 1 und ohne Außengehäuse 60 in der geöffneten Position in einer Draufsicht dargestellt. Der Verschluss 1 liegt nun mit den Anschlagflächen 5 (a, b) an den Anschlagrippen 13 (a, b) des Basisgehäuses 10 an und die Führungsfläche 3 (a, b) des Verschlusses 1 wird teilweise von der Führungsrippe 14 (a, b) des Basisgehäuses 10 überdeckt. Somit liegen die Steckdoseneinsätze 65 (a, b) frei zugänglich in der Baugruppe.

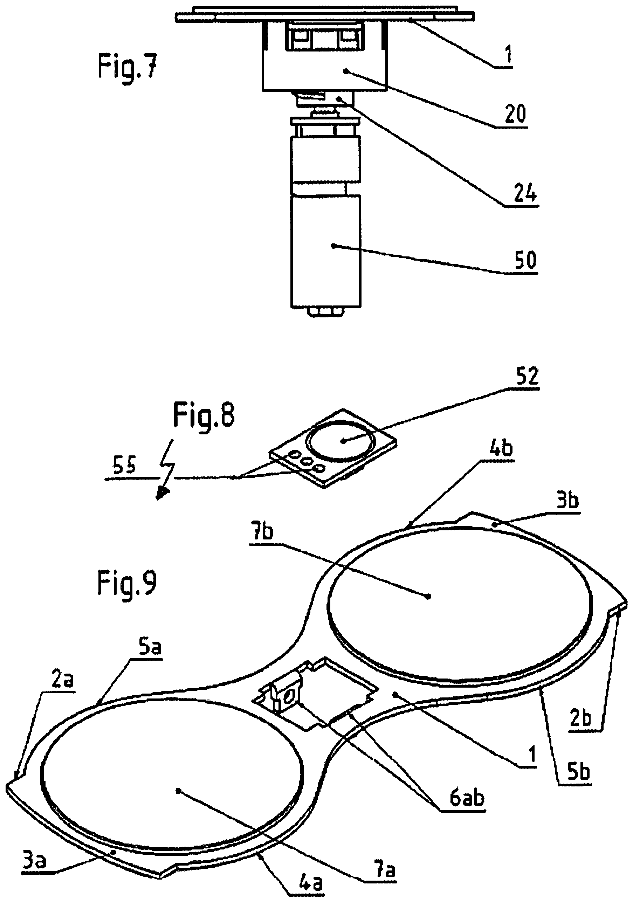

Die Figur 7 zeigt beispielhaft eine Antriebsmechanik als Vorbaugruppe in einer Seitenansicht. Diese Vorbaugruppe besteht aus dem Verschluss 1 der mit einer Bewegungshülse 20 lagefixiert und fest verbunden ist. In die Bewegungshülse 20 ragt das Antriebsdrehteil 24 hinein dass wiederum mit einer elektrischen Antriebseinheit 50 über eine Achsverbindung gekoppelt ist.

Figur 8 zeigt eine Sensorplatine 52, die in unterschiedlichsten Ausführungen ausgestaltet sein kann und die unterschiedliche Positionen in der Gesamtbaugruppe Steckdosenelement einnehmen kann.

Die Figur 9 bildet den Verschluss 1 mit seinen Funktionselementen als Einzelteil in einer isometrischen Darstellung ab. Die Kontur des Verschlusses 1 ergibt sich aus den komplementären Anschlagsflächen 4 (a, b) und 5 (a, b) sowie den Führungsflächen 2 (a, b) und 3 (a, b) als auch aus den Ausprägungen 7 (a, b) für eine plane Gesamtoberfläche. Zentrisch ist eine Ausformung 8 für eine Sensorplatine 52 vorgesehen, in der 2 Befestigungslaschen 6 (a, b) ausgeformt sind.

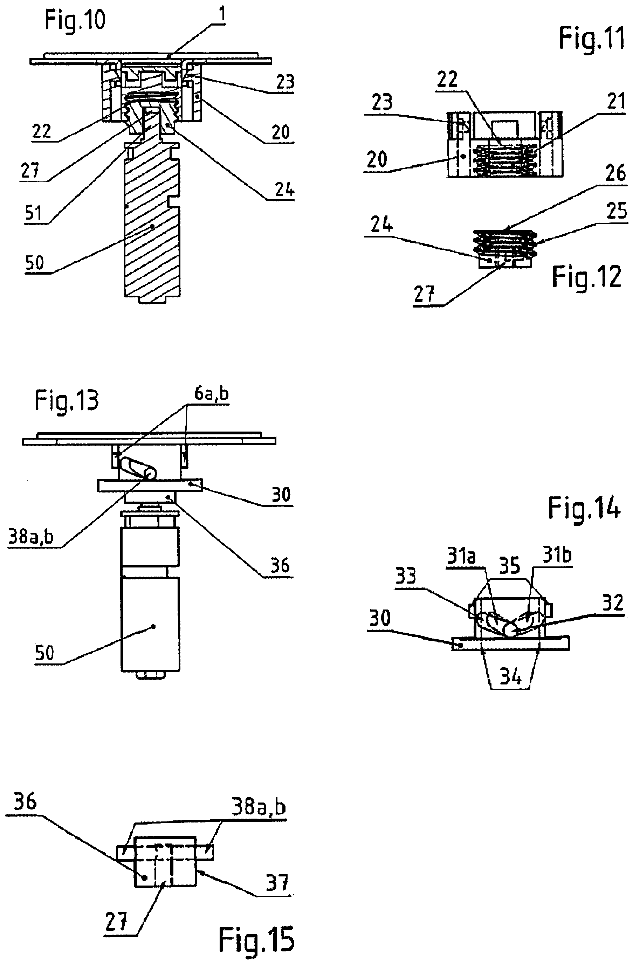

Die Figuren 10 bis 12 zeigen die Einzelteile einer möglichen Antriebsmechanik und die Baugruppenzuordnung im Halbschnitt mit dem Wirkprinzip einer Gewindeverbindung. Die Bewegungshülse 20 wird mittels der Verbindungszapfen 23 (a, b) und den Befestigungslaschen 6 (a, b) mit dem Verschluss 1 verbunden. Im Innern der Bewegungshülse 20 ist ein Innengewinde 21 ausgeformt. Am inneren Ende des Innengewindes 21 befindet sich die Anschlagfläche 22 der Bewegungshülse 20. Komplementär zum Innengewinde 21 besitzt das Antriebsdrehteil 24 ein Außengewinde 25 und ebenso am oberen Ende eine Anschlagsfläche 26 und eine im Inneren ausgeformte Ausnehmung, die als Aufnahmebohrung 27 für die Drehachse 51 der elektrischen Antriebseinheit 50 ausgebildet ist.

Die Figuren 13 bis 15 zeigen die Einzelteile einer möglichen Antriebsmechanik und die Baugruppenzuordnung der Seitenansicht mit dem Wirkprinzip einer Helixausformung 31 (a, b) in der Bewegungshülse 30. Die Befestigung des Verschlusses 1 erfolgt ebenso über dessen Befestigungslaschen 6 (a, b) und den Verbindungszapfen 35 (a, b) der Bewegungshülse 30. Jede Helixausformung 31 (a, b) besitzt einen oberen Totpunkt 33 und einen unteren Totpunkt 32. Die Bewegungshülse 30 ist im Innern zylindrisch ausgeformt und bildet somit eine Führungsfläche 34 für das Antriebsdrehteil 36. Das Antriebsdrehteil besitzt eine zylindrische Außenform 3 und ist mit zwei diametrisch angeordneten zylindrischen Zapfen 38 (a, b) ausgebildet, die in der Baugruppe der Antriebsmechanik in die Helixausformungen 31 (a, b) eingreifen. Auch dieses Antriebsdrehteil 36 besitzt eine im Inneren ausgeformte Ausnehmung, die als Aufnahmebohrung 27 für die Drehachse 51 der elektrischen Antriebseinheit 50 ausgebildet ist.

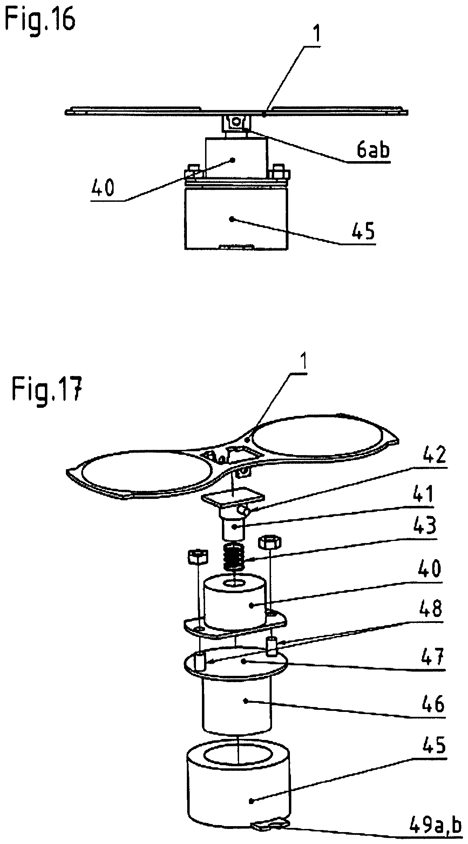

Die Figuren 16 und 17 stellen eine alternative Antriebsmechanik auf der Basis einer kombinierten Hub-Dreh-Magnettechnik in der Seitenansicht und einer Explosionsansicht dar. Die Seitenansicht zeigt eine mögliche Aufbauform in der der Verschluss 1 mit seinen Befestigungslaschen 6 (a, b) und den Verbindungszapfen 42 der Zugachse 41 des Hubmagneten 40 einen Formschluss bilden. Unterhalb des Hubmagneten 40 ist ein Drehmagnet 45 angeordnet. In der Explosionsansicht wird der schematische Aufbau dieser Antriebsmechanik näher dargestellt. Hierbei besteht der Hubmagnet im Wesentlichen aus dem Spulenkörper 40 in dessen Mitte eine Zugachse 41 angeordnet ist, die bei Strombeaufschlagung gegen eine Druckfeder 43 in den Spulenkörper 40 hineingezogen wird. Der Hubmagnet 40 wird mittels Befestigungselementen 48 auf einer Verbindungsplatte 47 befestigt, die wiederum fest mit dem Rotationskörper 46 verbunden ist. Der Rotationskörper 45 ist zentrisch im Außenkörper des Drehmagneten 45 drehbar gelagert. Am Außenkörper des Drehmagneten 45 sind Befestigungslaschen 49 (a, b) angeformt, die den Außenkörper des Drehmagneten 45 fest mit dem Basisgehäuse 10 verbinden.

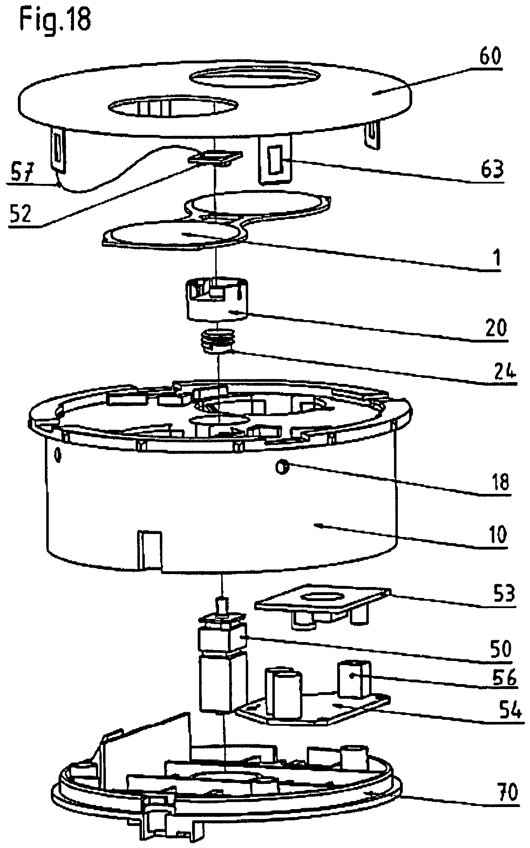

Die Figur 18 zeigt den Aufbau eines Steckdosenelementes in seiner Gesamtheit anhand eines Ausführungsbeispiels in einer Explosionsdarstellung. Das Basisgehäuse 10 und das Außengehäuse 60 bilden im Zusammenbau einen Hohlraum, in dem der Verschluss 1 mittels der Bewegungshülse 20 und des Antriebdrehteils 24 seine lineare Hubbewegung und seine Drehbewegung ausführen kann. Zentrisch ist die Möglichkeit einer Sensorplatine 52 vorgesehen. Im Innern des Basisgehäuses 10 sind die Steckdoseneinsätze 65 (a, b), die elektrische Antriebseinheit 50 und weitere Sensorplatinen 53 sowie die Motorsteuerplatine 54 angeordnet. Den Abschluss der Baugruppe bildet der Gehäuseboden 70.

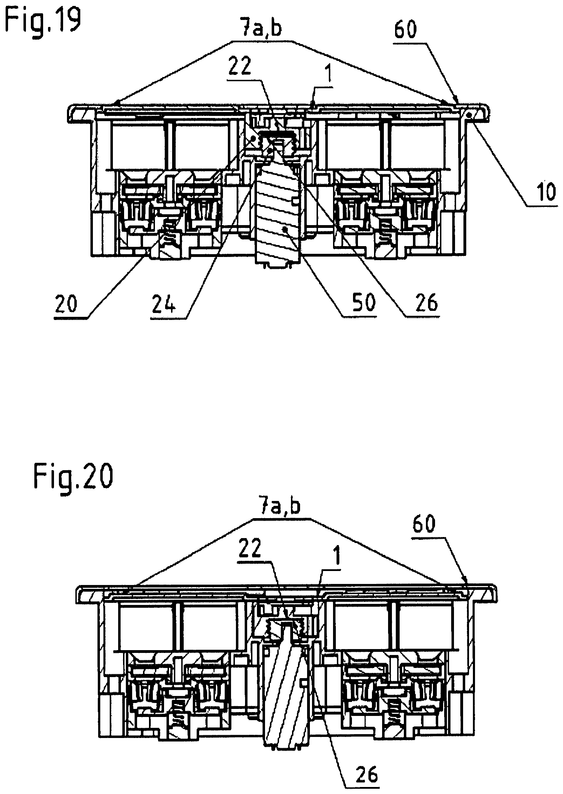

Die Figuren 19 und 20 sind Darstellungen des Steckdosenelementes im Halbschnitt, wobei die Figur 19 das Steckdosenelement in der geschlossenen Position des Verschlusses 1 darstellt. In diesem Fall sind die Oberflächen der Ausprägungen 7 (a, b) planparallel mit der Oberfläche des Außengehäuses 60. Zwischen der Anschlagsfläche 22 der Bewegungshülse 20 und der Anschlagsfläche 26 des Antriebsdrehteils 24 befindet sich ein Spalt. In der Figur 20 wird die linear abgesenkte Position des Verschlusses 1 dargestellt, wobei die Oberfläche der Ausprägungen 7 (a, b) unter das Niveau der Innenseite des Außengehäuses 60 abgesenkt wird. Die Anschlagsfläche der Bewegungshülse 22 und die Anschlagsfläche 26 des Antriebsdrehteils 24 fahren zusammen.

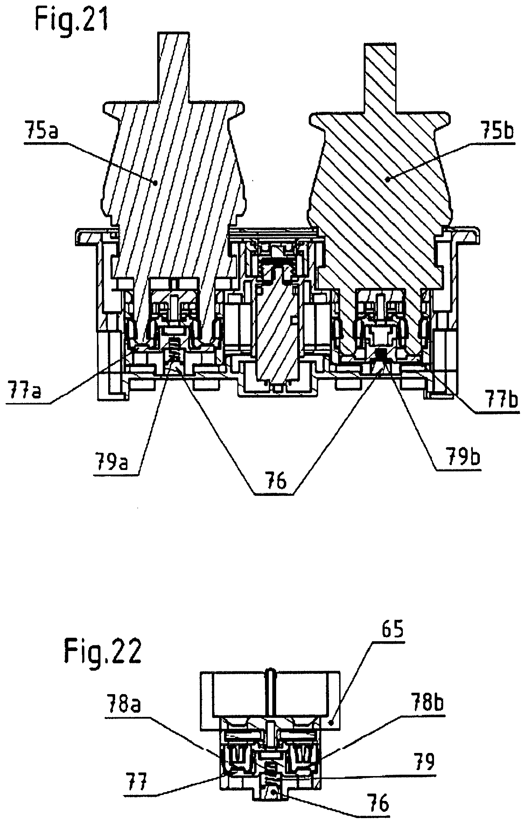

Die Figur 21 ist eine Darstellung des Steckdosenelementes im Halbschnitt mit zwei eingesteckten Steckern 75 (a, b) die in die Steckdoseneinsätze 65 (a, b) in unterschiedlicher Höhe eingreifen. Der Stecker 75a berührt gerade so die Druckflächen 78 (a, b) des Schalterstößels 77a, so dass die Druckfeder 79a mit leichter Vorspannung auf dem Mikrotaster 76 aufliegt. Der Stecker 75b bezeichnet die Endlage des vollständig eingesteckten Steckers 75b im Steckdoseneinsatz 65 und stellt den Schalterstößel 77b in seiner gedrückten Endlage dar, wobei auch die Schalterfeder 79b in ihrer komprimierten Lage abgebildet ist.

Die Figur 22 ist ein Halbschnitt durch einen Steckdoseneinsatz 65 der die Anordnung des Mikrotasters mit dem Schaltstößel 77 und den Druckflächen des Schaltstößels 78 (a, b) sowie die Druckfeder 79 im Zusammenbau abbildet.

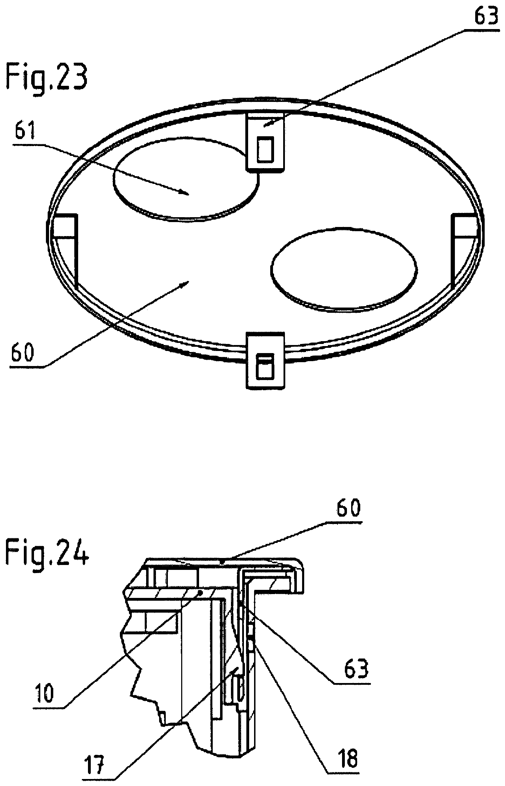

Die Figur 23 zeigt das Außengehäuse 60 in einer isometrischen Unteransicht als Vorbaugruppe mit den 4 Befestigungswinkeln 63, die an der Innenseite des Außengehäuses 60 fest fixiert sind und eine Ausnehmung zur Aufnahme eines Rastelementes besitzen.

Die Figur 24 ist eine im Schnitt dargestellte Detailansicht von der Außengehäusebefestigung im Verbund mit dem Basisgehäuse 10. Der Rasthaken 17 greift in die Ausnehmung des Befestigungswinkels 63 ein.

Im Folgenden wird die Funktionsweise anhand der aufgeführten erfinderischen Lösungsfindungen erklärt.

Grundsätzlich können alle Arten der Signalerzeugung ohne mechanische Bedienelemente, wie beispielsweise elektrische Feldveränderung, kapazitive Veränderung, optische Veränderung durch hell-dunkel Abgleich, akustische Eingabe, Funk und Infraroteingaben zum Einsatz kommen. Beispielhaft stehen hier die Ausführungsbeispiele der Sensorplatinen 52 und 53. Die Sensorplatinen 52 und 53 sind im Innern des Basisgehäuses 10 angeordnet und mit der Motorsteuerungsplatine 54 über Kabel verbunden (die Kabelverbindungen wurden generell nicht in den Darstellungen und die Figurenbeschreibungen aufgenommen).

Die Sensorplatine 53 stellt das Empfangsteil in einem Smart Home gesteuerten System dar. Die Befehlseingabe zum Öffnen oder Schließen des Steckdosenelementes kann über die App eines Smartphones oder über die Sprachbox des Smart Home Systems erfolgen. Hierbei besteht die Möglichkeit, über ein Intranet oder eine Bus-Verbindung die Sensorplatine 53 anzusprechen, oder aber beispielsweise über die Sprachbox, die ein Funksignal oder ein Infrarotsignal an die Sensorplatine 53 schickt. Die Sensorplatine 53 wandelt nun das Eingangssignal um und schickt ein Steuersignal an die Motorsteuerplatine 54.

Ähnlich wie bei der Sprachbox, aber in seiner Struktur viel einfacher gehalten, kann die Sensorplatine 53 auch als eigenständiges Sprachmodul ausgebildet sein. In diesem Fall können beispielsweise ein oder zwei Mikrofone in die Durchgangslöcher 16 des Basisgehäuses 10 eingelassen werden und über einen Programmiertaster im Gehäuseboden (nicht dargestellt) können analoge Befehle gespeichert und in digitale Signale umgewandelt werden, die wiederum dann als Steuersignale an die Motorsteuerplatine 54 gesendet werden.

Somit können unterschiedliche, phonetische Klangbilder, wie zum Beispiel "Auf" und "Zu" personenabhängig vor dem Verbau des Steckdosenelementes abgespeichert werden. Damit kann das Öffnen und Schließen des Steckdosenelementes einer bestimmten Personengruppe zugeordnet werden, eine zusätzliche mechanische Kindersicherung für die Steckdosen kann somit entfallen. Die Motorsteuerplatine 54 und die Sensorplatine 53 können als getrennte Platinen verbaut werden, es ist aber auch denkbar, beide Schaltkreise auf einer Platine zu vereinen, dies würde eine zusätzliche Verdrahtung einsparen.

Im Falle einer optoelektronischen Signalerzeugung könnte die Sensorplatine 52 im Verschluss 1 zentrisch integriert werden. Hierfür ist im Verschluss 1 eine Ausformung 8 vorgesehen. Bei der Verwendung der Optoelektronik, einer Reflexionslichtschranke oder eines fotoelektrischen optischen Sensors muss das Außengehäuse 60 zentrisch eine Ausnehmung aufweisen, in der die Optoelektronik platziert ist (die Ausnehmung ist in den Darstellungen und in der Figurenbeschreibung nicht abgebildet). Wird der ausgesendete Lichtstrahl unterbrochen oder aber registriert das Lichtfeld eine Beschattung, nimmt der Sensor die Veränderung wahr und sendet ein Steuersignal an die Motorsteuerplatine 54. Diese Wirkweise erlaubt, wie auch die vorhergehenden Sensortechniken eine komplett berührungslose Bedienbarkeit des Steckdosenelementes.

Bei der kapazitiven Sensortechnik wird vom Sensor ein elektrisches Feld generiert und auf Veränderungen überwacht. Auch hier kann der Sensor 52, ausgelegt als kapazitiver Sensor, in den Verschluss 1 integriert werden. Der kapazitive Sensor 52 kann bei elektrisch leitenden Materialien als Touch Sensor ausgebildet werden und/oder auch bei nicht elektrisch leitenden Materialien als berührungsloser Sensor Verwendung finden. Bei der Touch Version wird das metallische Außengehäuse 60 mit einer Leitungspaarung an den Sensor angeschlossen. Berührt man das Außengehäuse an einer beliebigen Stelle, verändert sich das elektrische Feld und der Sensor generiert ein Steuersignal und sendet dieses an die Motorsteuerplatine 54. Bei der berührungslosen kapazitiven Sensortechnik muss man nur mit dem Finger oder der ganzen Hand durch das elektrische Feld streifen, dann verändert sich die Kapazität des elektrischen Feldes, ein Steuersignal wird erzeugt und an die Motorplatine 54 gesendet.

Alle möglichen Sensortechniken und Anbindungen an Smart Home Systeme benötigen keine mechanische Bedieneinheit wie Sie unter den benannten Lösungsbeispielen in der Rubrik Stand der Technik dargestellt sind.

Die Motorsteuerplatine 54 setzt, nach Eingabe des Steuersignals der Sensorplatinen 52 oder 53, die elektrische Antriebseinheit 50 unter Spannung und beginnt die Drehachse der elektrischen Antriebseinheit 51 zu drehen. Auf der Drehachse der elektrischen Antriebseinheit 51 ist das Antriebsdrehteil 24 mittels der Aufnahmebohrung 27 fest mit der Drehachse 51 verbunden. Durch die Drehbewegung des Außengewindes 25 des Antriebdrehteils 24 wird die Bewegungshülse 20 über das Innengewinde 21 axial in das Steckdosenelement hineingezogen.

Der Verschluss 1, der mittels der Befestigungslaschen 6 (a, b) des Verschlusses 1 und den Verbindungszapfen 23 (a, b) der Bewegungshülse 20 formschlüssig mit der Bewegungshülse 20 verbunden ist und mit den Anschlagsflächen 2 (a, b) des Verschlusses 1 gegenüber den Anschlagsflächen 11 (a, b) des Basisgehäuses 10 anliegt, wobei diese Flächenpaarung eine Drehbewegung der Bewegungshülse 20 verhindert, wird nun mittels der Bewegungshülse 20 linear in das Steckdosenelement hineingezogen. Die Höhenabstimmung der Anschlagsflächen 11 (a, b) des Basisgehäuses 10 und der Anschlagsflächen 2 (a, b) des Verschlusses 1 ist so dimensioniert, dass die Ausprägungen 7 (a, b) des Verschlusses 1 sicher unter das Niveau der Innenseite des Außengehäuses 60 abgesenkt werden. Wenn die Rippentiefe der Anschlagsflächen 11 (a, b) des Basisgehäuses 10 durch den Verschluss 1 überwunden ist, kann sich der Verschluss 1 mit der Bewegungshülse 20 unterhalb der Führungsrippen 14 (a, b) des Basisgehäuses 10 in die Offenstellung drehen bis die Anschlagsflächen 5 (a, b) des Verschlusses 1 an den Anschlagsrippen 13 (a, b) des Basisgehäuses 10 anschlagen. Somit ist der Verschluss 1 aus dem Wirkbereich der Steckdoseneinsätze 65 (a, b) herausgedreht und die Steckdoseneinsätze 65 (a, b) sind uneingeschränkt nutzbar. Die Führungsflächen 3 (a, b) des Verschlusses 1 gleiten unter die Führungsrippen 14 (a, b) des Basisgehäuses und verhindern somit, dass die Oberfläche der Ausprägung 7 (a, b) des Verschlusses 1 verkratzt wird.

Wenn der Verschluss 1 an den Anschlagrippen 13 (a, b) anschlägt, wird die Drehbewegung der elektrischen Antriebseinheit 50 aufgehalten, die Gewindeverbindung 21 und 25 erzeugt ein leichtes Haltemoment und die Stromamplitude steigt bis auf einen definierten Wert an. Bei Erreichen des Wertes wird die elektrische Antriebseinheit 50 abgeschaltet und im IC-Schaltkreis der Motorsteuerplatine 54 umgepolt. Das Steckdosenelement ist geöffnet.

Bei erneuter Eingabe eines Steuersignals startet die elektrische Antriebseinheit 50 in umgekehrter Drehrichtung die Drehbewegung bis die Anschlagsflächen 4 (a, b) des Verschlusses 1 an den Anschlagsrippen 12 (a, b) des Basisgehäuses 10 anschlagen. Da die elektrische Antriebseinheit 50 weiter dreht, der Verschluss 1 aber durch die Anschlagsrippen 12 (a, b) des Basisgehäuses 10 am Drehen gehindert wird, schiebt das Außengewinde 25 des Antriebsdrehteils 24 die Bewegungshülse 20 über das Innengewinde 21 den Verschluss 1 linear gegen das Außengehäuse 60. Somit werden die Ausprägungen 7 (a, b) des Verschlusses 1 linear von unten nach oben in die Öffnungen 61 (a, b) des Außengehäuses eingeschoben und bilden mit der Oberfläche des Außengehäuses 60 eine plane Gesamtfläche. Wenn der Verschluss 1 am Außengehäuse 60 anschlägt, steigt wiederum die Stromamplitude bis auf einen definierten Wert an. Bei Erreichen des Wertes wird die elektrische Antriebseinheit 50 abgeschaltet und im IC-Schaltkreis der Motorsteuerplatine 54 umgepolt. Das Steckdosenelement ist geschlossen.

Bei einem weiteren Ausführungsbeispiel sind die Sensorik, der Bewegungsablauf des Verschlusses 1 und die elektrische Antriebseinheit 50 gleich gehalten, nur das Antriebsdrehteil 36 und die Bewegungshülse 30 sind unterschiedlich ausgestaltet. Die Bewegungshülse 30 ist ein zylindrischer Drehkörper, in dessen Zentrum sich eine Hohlbohrung 34 befindet, die zur Führung des Antriebsdrehteils 36 dient. Im oberen Bereich der Bewegungshülse 30 sind zwei Verbindungszapfen 35 nach Außen ausgeformt, die im Zusammenbau mit den Befestigungslaschen 6 (a, b) des Verschlusses 1 einen Formschluss bilden.

In der Hülsenwandung befinden sich zwei diametral angeordnete Helixausformungen 31 (a, b) die durch einen oberen Totpunkt 33 und einen unteren Totpunkt 32 begrenzt sind.

Das Antriebsdrehteil 36 ist ebenso ein zylindrischer Drehkörper, an dessen oberen Ende zwei Zylinderzapfen 38 (a, b) ausgeformt sind, wobei zentrisch von unten die Aufnahmebohrung 27 für die Drehachse der elektrischen Antriebseinheit 50 ausgebildet ist.

Im Zusammenbau taucht das Antriebsdrehteil 36 mit seiner zylindrischen Außenwand 37 in die Bewegungshülse 30 ein und wird durch die Innenbohrung mit der Führungsfläche 34 axial geführt.

Hierbei befinden sich die Zylinderzapfen 38 (a, b) des Antriebsdrehteiles 36 in den Helixausformungen 31 (a, b) der Bewegungshülse 30. Das Antriebsdrehteil ist ebenso mit der elektrischen Antriebseinheit fest verbunden.

Beginnt sich die Drehachse 51 der elektrischen Antriebseinheit 50 zu drehen, so wird die Drehung des Verschlusses 1 zunächst durch die Flächenpaarung 2 (a, b) des Verschlusses 1 und 11 (a, b) des Basisgehäuses 10 verhindert. Durch das Drehen des Antriebsdrehteils 36 wird die Bewegungshülse 30 mittels der Zylinderzapfen 38 (a, b), die sich in den Helixausformungen 31 (a, b) der Bewegungshülse 30 vom unteren Totpunkt 32 zum oberen Totpunkt 33 bewegen, linear in das Basisgehäuse 10 abgesenkt. Bei Erreichen einer ausreichenden Tiefe des Verschlusses 1 erfolgt das Drehverhalten wie bei dem zuvor angeführten Ausführungsbeispiel. Das Steckdosenelement ist nun geöffnet.

Der Schließvorgang beginnt ebenso wie beim vorhergehenden Ausführungsbeispiel, bis der Verschluss 1 an die Anschlagsrippen 13 (a, b) anschlägt. Nun dreht das Antriebsdrehteil 36 weiter und drückt mittels der Zylinderzapfen 38 (a, b) die Bewegungshülse 30 über die Seitenwände der Helixausformungen 31 (a, b) linear nach oben bis der Verschluss 1 am Außengehäuse 60 anschlägt. Jetzt ist wie im vorherigen Ausführungsbeispiel die Endposition des Verschlusses 1 erreicht. Das Steckdosenelement ist geschlossen.

Ein weiteres Ausführungsbeispiel bezieht sich auf eine andere Möglichkeit der Antriebseinheit.

Diese wird, wie in den Figuren 16 und 17 dargestellt, durch eine Kombination aus einem Hubmagneten und einem Drehmagneten gebildet. Die Befestigung des Verschluss 1 kann ebenso über die Befestigungslaschen 6 (a, b) mit der Zugachse 41 des Hubmagneten 40 mittels der Verbindungszapfen 42 erfolgen. Der Hubmagnet 40 ist mittels einer Verbindungsplatte 47 auf dem Rotationskörper des Drehmagneten 46 über die Verbindungsbolzen 48 fest verbunden. Der Außenkörper des Drehmagneten 45 ist im Basisgehäuse 10 über seitliche Befestigungslaschen 49 fest fixiert.

Bei Eingabe des Steuersignals setzt die Motorsteuerplatine 54 zuerst den Hubmagneten unter Spannung und zieht mittels der Zugachse 41 den Verschluss gegen die Druckfeder 43 nach unten in Richtung Basisgehäuse 10. Somit werden die Ausprägungen 7 (a, b) unter das Niveau der Unterseite des Außengehäuses 60 abgesenkt. Nun setzt zeitverzögert die Drehung des Rotationskörpers des Drehmagneten 46 ein und dreht den Verschluss 1 gegen die Anlage der Anschlagrippen 13 (a, b) in die Position "Auf" und die Motorsteuerplatine 54 schaltet die Magneten 40 und 45 in Endstellung stromlos und polt die Drehrichtung des Drehmagneten 45 um. Das Steckdosenelement ist geöffnet.

Wird nun das Steuersignal über die Sensorik eingegeben, zieht der Hubmagnet 40 wieder an und der Drehmagnet 45 dreht den Verschluss 1 in eine Position, so dass der Verschluss 1 zur Anlage an die Anschlagrippe 12 (a, b) des Basisgehäuses 10 kommt. Nun schaltet die Motorsteuerplatine 54 die Magneten 40 und 45 in Endstellung stromlos und die Rückstellfeder 43 des Hubmagneten 40 drückt den Verschluss 1 mittels der Zugachse 41 linear gegen das Außengehäuse 60, so dass die Ausprägungen 7 (a, b) eine plane Fläche mit dem Außengehäuse 60 bilden.

Um eine Fehlbedienung des Verschlusses 1 im Falle eines gesteckten Steckers 75 zu verhindern, ist im Boden des Steckdoseneinsatzes 65 ein Mikrotaster 76 angeordnet. Der Mikrotaster 76 ist als Öffner ausgelegt und ist zwischen der Sensorik 53 und der Motorsteuerplatine 54 im Schaltkreis eingefügt. Durch das Eingreifen des Steckers 75 in den Steckdoseneinsatz 65 wird mittels der Steckerstifte des Steckers 75 eine Kraft auf die Druckflächen 78 (a, b) des Schaltstößels 77 ausgeübt, der Schaltstößel 77 in Richtung Microtaster76 bewegt, so dass die Druckfeder 79, die sich zwischen dem Schaltstößel 77 und dem Druckpunkt des Mikrotasters 76 befindet, komprimiert wird und der Mikrotaster 76 sich öffnet und damit die Sensorik 53 ausschaltet, so dass kein Steuersignal erzeugt werden kann solange ein Stecker 75 gesteckt ist. Wird der Stecker 75 gezogen, entspannt sich die Druckfeder 79 und der Taster 76 schließt den Stromkreis der Sensorik 53 und der Motorsteuerplatine 54.

Das Außengehäuse 60 ist über Befestigungshaken 63 mit dem Basisgehäuse 10 reversibel verbunden. Die Befestigungshaken 63 des Außengehäuses 60 bilden im montierten Zustand mit den Rasthaken 17 des Basisgehäuses 10 einen Formschluss. Zu Revisionszwecken und zur leichteren Demontage bei Recyclingvorgängen befinden sich auf der zylindrischen Außenseite des Basisgehäuses 10 vier Revisionslöcher 18. Durch Einführen eines geeigneten Werkzeuges werden die 4 Rasthaken des Basisgehäuses 10 in das Innere des Basisgehäuses 10 gedrückt und der Formschluss mit dem Außengehäuse 60 aufgehoben. Nun kann das Außengehäuse demontiert werden.

Zusammenfassend ist fest zu halten das die erfinderische Offenbarung ein Steckdosenelement beschreibt, das ohne mechanische Bedienelemente auskommt, nur durch beispielsweise Annäherung des Steckers oder einer Hand an das Steckdosenelement den Verschluss öffnet und bei Entfernen des Steckers das Steckdosenelement automatisch wieder schließt. Dabei wird eine lineare Bewegung und die Rotationsbewegung des Verschlusses in logischer Abfolge voll automatisch umgesetzt. Die Oberfläche auf der Bedienerseite ist dadurch schmutzresistenter ausgestaltet, die Bedienung ist wesentlich vereinfacht und die Mechanik ist vor menschlichen Fehlbedienungen geschützt. Ein Verletzungsrisiko bei der Bedienung ist ausgeschlossen und die Möglichkeit einer Automatisierung und Einbindung in ein Smart Home System ist umgesetzt.

### Bezeichnungsliste

- 01: Verschluss
- 02: Anschlagflächen für Linearbewegung am Verschluss (a, b)
- 03: Führungsfläche am Verschluss (a, b)
- 04: Anschlag für Drehbewegung "Zu" am Verschluss (a, b)
- 05: Anschlag für Drehbewegung "Auf" am Verschluss (a, b)
- 06: Befestigungslaschen am Verschluss (a, b)
- 07: Ausprägung (a, b)
- 08: Ausformung in der Verschlussmitte

- 10: Basisgehäuse
- 11: Anschlagflächen für Linearbewegung am Basisgehäuse (a, b)
- 12: Anschlagrippe für Drehbewegung "Zu" am Basisgehäuse (a, b)
- 13: Anschlagrippe für Drehbewegung "Auf" am Basisgehäuse (a, b)
- 14: Führungsrippe am Basisgehäuse (a, b)
- 15: Führungsausnehmung für die Bewegungshülse im Basisgehäuse
- 16: Durchgangslöcher
- 17: Rasthaken 4x
- 18: Revisionsloch 4x

- 20: Bewegungshülse mit Innengewinde
- 21: Innengewinde
- 22: Anschlagfläche Bewegungshülse
- 23: Verbindungszapfen (a, b)
- 24: Antriebsdrehteil mit Außengewinde
- 25: Außengewinde
- 26: Anschlagsfläche Antriebsdrehteil
- 27: Aufnahmebohrung für Drehachse

- 30: Bewegungshülse mit Helixausformung
- 31: Helixausformung (a, b)
- 32: Unterer Totpunkt Helixausformung
- 33: Oberer Totpunkt Helixausformung
- 34: Führungsfläche für das Antriebsdrehteil
- 35: Verbindungszapfen
- 36: Antriebsdrehteil mit Zylinderzapfen
- 37: Führungsfläche Antriebsdrehteil
- 38: Zylinderzapfen (a, b)

- 40: Außenkörper Hubmagnet (Spulenkörper)
- 41: Zugachse
- 42: Verbindungszapfen
- 43: Druckfeder
- 45: Außenkörper Drehmagnet
- 46: Rotationskörper Drehmagnet
- 47: Verbindungsplatte
- 48: Verbindungsbolzen
- 49: Befestigungslaschen

- 50: Elektrische Antriebseinheit
- 51: Drehachse der elektrischen Antriebseinheit
- 52: Sensorplatine (Hall, optoelektronisch)
- 53: Sensorplatine (Kapazitiv, Infrarot, Funk)
- 54: Motorsteuerplatine

- 60: Außengehäuse
- 61: Öffnungen für Steckdosenzugang (a, b)
- 62: Oberflächenrand der Öffnungen (a, b)
- 63: Befestigungswinkel 4x
- 65: Steckdoseneinsätze (a, b)

- 70: Gehäuseboden
- 75: Stecker (a, b)
- 76: Mikrotaster Öffner
- 77: Schaltstößel (a, b)
- 78: Druckflächen Schalterstößel (a, b)
- 79: Schaltdruckfeder

## Patentansprüche

1. Installationselement für elektrische Anschlüsse mit einem Basisgehäuse (10), in dem mehrere elektrische Steckdosenvorrichtungen angeordnet sind, und einem Außengehäuse (60), das mehrere Durchlassöffnungen aufweist, auf dem Basisgehäuse (10) fest fixiert ist und mit einem Gehäuseboden (70) von unten geschlossen ist, wobei zwischen dem Außengehäuse (60) und dem Basisgehäuse (10) eine drehbare Verschlussmechanik mit einem Verschluss (1) angeordnet ist, sodass in einer verschlossenen Position Ausprägungen (7a, 7b) des Verschlusses (1) eine plane Oberfläche zu der Oberfläche des Außengehäuses (60) bilden und in einer geöffneten Position Öffnungen (61a, 61b) des Außengehäuses (60) einen freien Zugriff auf die Steckdosenvorrichtungen gewähren, und wobei eine elektrische Antriebseinheit (50) zwischen den Steckvorrichtungen angeordnet ist, um die Ausprägungen (7a, 7b) des Verschlusses (1) linear von unten nach oben in die Öffnungen (61a, 61b) des Außengehäuses (60) einzuschieben und mit der Oberfläche des Außengehäuses (60) eine plane Oberfläche zu bilden, ***dadurch gekennzeichnet, dass*** durch nicht mechanisch zu betätigende Elemente ein Steuersignal erzeugt wird und an eine Steuerelektronik der Antriebseinheit gesendet wird, sodass eine Motorplatine (54) die elektrische Antriebseinheit unter Eingabe des Steuersignals unter Spannung setzt, sodass die elektrische Antriebseinheit (50) die Verschlussmechanik linear und auch rotatorisch beim Öffnen und Schließen des Verschlusses bewegt.

2. Installationselement nach Anspruch 1, ***dadurch gekennzeichnet, dass*** die Antriebseinheit (50) die Verschlussmechanik zum Öffnen der Durchlassöffnung zuerst linear und anschließend rotatorisch bewegt und/oder zum Verschließen der Durchlassöffnung zuerst rotatorisch und anschließend linear bewegt.

3. Installationselement nach einem der vorhergehenden Ansprüche, ***dadurch gekennzeichnet, dass*** die Antriebseinheit (50) beim Öffnen der Verschlussmechanik eine Feder spannt, die die Bewegung beim Verschließen der Durchlassöffnung unterstützt oder bewirkt und/oder beim Verschließen der Verschlussmechanik eine Feder spannt, die die Bewegung beim Öffnen der Durchlassöffnung unterstützt oder bewirkt.

4. Installationselement nach einem der vorhergehenden Ansprüche, ***dadurch gekennzeichnet, dass*** die Antriebseinheit (50) einen Elektromagneten aufweist, der die Verschlussmechanik linear bewegt.

5. Installationselement nach einem der vorhergehenden Ansprüche, ***dadurch gekennzeichnet, dass*** das Außengehäuse (60) reversibel mit dem Basisgehäuse verbunden ist.

6. Installationselement nach einem der vorhergehenden Ansprüche, ***dadurch gekennzeichnet, dass*** das Steuersignal durch eine elektrische Feldveränderung, durch das bloße Berühren des Außengehäuses (60), , durch eine akustische Eingabe, durch einen Lichtsensor und/oder über eine Anbindung an eine Smart Home Anwendung erzeugt wird.

7. Installationselement nach einem der vorgehergehenden Ansprüche, ***dadurch gekennzeichnet, dass*** bei einem gesteckten Stecker die Initiierung der Antriebseinheit (50) durch ein Steuersignal unterbrochen ist.

8. Installationselement nach einem der vorgehergehenden Ansprüche, ***dadurch gekennzeichnet, dass*** der Verschluss (10) Anschlagsflächen (2a, b) und Führungsflächen (3a, b) und das Basisgehäuse (10) Anschlagflächen (11a, b), und Führungsrippen (14a, b) aufweist und beim Öffnen der Verschluss (1) die Anschlagflächen (2a, b) des Verschlusses (1) komplementär zu den Anschlagflächen (11a, b) des Basisgehäuses (10) eine translatorische Abwärtsbewegung vollziehen bis die Führungsflächen (3a, b) des Verschlusses (1) unter den Führungsrippen (14a, b) des Basisgehäuses (10) eintauchen können.

9. Installationselement nach Anspruch 8, ***dadurch gekennzeichnet, dass*** bei einer rotatorischen Bewegung des Verschlusses (1) die Führungsflächen (3a,b) des Verschlusses (1) unter den Führungsrippen (14a, b) des Basisgehäuses (10) entlang gleiten.

10. Installationselement nach einem der Ansprüche 8 oder 9, ***dadurch gekennzeichnet, dass*** der Verschluss (1) eine Ausprägung (7a, b) aufweist, deren Höhe geringer ist als die Dicke der Führungsrippen (14a, b) des Basisgehäuses (10).

11. Installationselement nach einem der Ansprüche 9 oder 10, ***dadurch gekennzeichnet, dass*** das Basisgehäuse (10) Anschlagrippen (13a,b) aufweist, durch die die rotatorische Bewegung des Verschlusses (1) bei einem Öffnen begrenzt wird und/oder durch die die rotatorische Bewegung des Verschlusses (1) bei einem Schließen begrenzt wird.

12. Installationselement nach einem der vorgehergehenden Ansprüche, ***dadurch gekennzeichnet, dass*** der Verschluss (1) Anschlagsflächen (4a, b) und Führungsflächen (3a, b) und das Basisgehäuse (10) Anschlagflächen (12a, b) aufweist, und beim Schließen der Verschluss (1) die Anschlagflächen (4a, b) des Verschlusses (1) komplementär zu den Anschlagflächen (12a, b) des Basisgehäuses (10) anschlagen und der Verschluss (1) eine translatorische Aufwärtsbewegung vollzieht bis die Führungsflächen (3a, b) des Verschlusses (1) am Außengehäuse (60) innenliegend anschlagen.

13. Installationselement nach einem der vorgehergehenden Ansprüche, ***dadurch gekennzeichnet, dass*** das Basisgehäuse (10) Durchgangslöcher (16) und eine Sensorplatine (53) aufweist, die im Basisgehäuse (10) im Bereich dieser Durchgangslöcher (16) außerhalb des Wirkkreises des beweglichen Verschlusses (1) angeordnet ist.

14. Installationselement nach Anspruch 13, ***dadurch gekennzeichnet, dass*** das Außengehäuse (60) metallisch ist und elektrisch leitend mit der Sensorplatine (53) verbunden ist.

15. Installationselement nach einem der vorgehergehenden Ansprüche, ***dadurch gekennzeichnet, dass*** der Verschluss (1) ein elektronisches Zeitglied aufweist, das nach einer Vorgabezeit ohne Betätigung selbstständig schließt.

16. Installationselement nach einem der vorgehergehenden Ansprüche, ***dadurch gekennzeichnet, dass*** sie einen Mikroschalter (76) aufweist und das Außengehäuse als Steckdosenvorrichtungen Steckdoseneinsätze (65) für einen Stecker (75) aufweist und das Stecken eines Steckers (75) in einen der Steckdoseneinsätze (65) den Mikroschalter (76) öffnet, und damit den Regelkreis der Elektronik unterbricht und somit das Schließen des Verschlusses (50) bei gestecktem Stecker (75) verhindert.

17. Installationselement nach Anspruch 16, ***dadurch gekennzeichnet, dass*** das Ziehen des Steckers (75) aus einem der Steckdoseneinsätze (65) den Mikroschalter (76) schließt und damit den Regelkreis der Elektronik aktiviert und über das Zeitglied ohne Betätigung den Verschluss (1) selbstständig schließt.

18. Installationselement nach einem der vorgehergehenden Ansprüche, ***dadurch gekennzeichnet, dass*** der Bewegung zwischen dem Verschluss und der elektrischen Antriebseinheit (5) das Wirkprinzip einer Gewindeverbindung oder einer Helixausformung oder einer Kombination aus einem Hubmagneten und einem Drehmagneten zu Grunde liegt.

## Claims

1. An installation element for electrical connectors comprising a base housing (10), in which a plurality of electrical socket devices are arranged, and an outer housing (60), which has a plurality of outlet openings, is fixed firmly on the base housing (10) and is closed from below with a housing bottom (70), wherein a rotatable closure mechanism with a closure element (1) is arranged between the outer housing (60) and the base housing (10) so that, in a closed position, elevations (7a, 7b) of the closure element (1) form a plane surface with the surface of the outer housing (60) and, in an open position, openings (61a, 61b) of the outer housing (60) allow an unhindered access to the socket devices, and wherein an electric drive unit (50) is arranged between the socket devices in order to insert the elevations (7a, 7b) of the closure element (1) linearly from below upwards into the openings (61a, 61b) of the outer housing (60) so as to form a plane surface with the surface of the outer housing (60), ***characterized in that*** a control signal is generated by elements that are not actuated mechanically and is sent to an electronic control assembly of the drive unit, so that a motor board (54) energizes the electric drive unit upon input of the control signal, so that the electric drive unit (50) moves the closure mechanism linearly as well as rotationally when the closure element is opened and closed.

2. The installation element according to claim 1, ***characterized in that*** the drive unit (50) moves the closure mechanism first linearly and then rotationally to open the outlet opening and/or first rotationally and then linearly to close the outlet opening.

3. The installation element according to one of the preceding claims, ***characterized in that,*** when the closure mechanism is opened, the drive unit (50) tensions a spring that assists or brings about the movement when the outlet opening is closed and/or, when the closure mechanism is closed, the drive unit (50) tensions a spring that assists or brings about the movement when the outlet opening is opened.

4. The installation element according to one of the preceding claims, ***characterized in that*** the drive unit (50) comprises an electromagnet that moves the closure mechanism linearly.

5. The installation element according to one of the preceding claims, ***characterized in that*** the outer housing (60) is connected in a reversible manner to the base housing.

6. The installation element according to any of the preceding claims, ***characterized in that*** the control signal is generated by a change in an electric field, by merely touching the outer housing (60), by an acoustic input, by a light sensor and/or via a connection to a smart home application.

7. The installation element according to one of the preceding claims, ***characterized in that,*** when a plug is plugged in, the initiation of the drive unit (50) is interrupted by a control signal.

8. The installation element according to one of the preceding claims, ***characterized in that*** the closure element (10) comprises stop surfaces (2a, b) and guide surfaces (3a, b) and the base housing (10) comprises stop surfaces (11a, b) and guide fins (14a, b) and, when the closure element (1) is opened, the stop surfaces (2a, b) of the closure element (1) abutting the complementary stop surfaces (11a, b) of the base housing (10) perform a translatory downward movement until the guide surfaces (3a, b) of the closure element (1) can dip under the guide fins (14a, b) of the base housing (10).

9. The installation element according to claim 8, ***characterized in that**,* during a rotational movement of the closure element (1), the guide surfaces (3a, b) of the closure element (1) slide along under the guide fins (14a, b) of the base housing (10).

10. The installation element according to one of claims 8 or 9, ***characterized in that*** the closure element (1) has an elevation (7a, b), the height of which is less than the thickness of the guide fins (14a, b) of the base housing (10).

11. The installation element according to one of claims 9 or 10, ***characterized in that*** the base housing (10) comprises stop fins (13a, b) by means of which the rotational movement of the closure element (1) is limited in the case of an opening and/or by means of which the rotational movement of the closure element (1) is limited in the case of a closing.

12. The installation element according to one of the preceding claims, ***characterized in that*** the closure element (1) comprises stop surfaces (4a, b) and guide surfaces (3a, b) and the base housing (10) comprises stop surfaces (12a, b) and, when the closure element (1) is closed, the stop surfaces (4a, b) of the closure element (1) hit the complementary stop surfaces (12a, b) of the base housing (10), and the closure element (1) performs a translatory upward movement until the guide surfaces (3a, b) of the closure element (1) abut the inner side of the outer housing (60).

13. The installation element according to one of the preceding claims, ***characterized in that*** the base housing (10) comprises through-holes (16) and a sensor board (53), which is arranged in the base housing (10) in the area of these through-holes (16) outside the effective range of the movable closure element (1).

14. The installation element according to claim 13, ***characterized in that*** the outer housing (60) is metallic and is connected to the sensor board (53) in an electrically conducting manner.

15. The installation element according to one of the preceding claims, ***characterized in that*** the closure element (1) comprises an electronic timer element, which closes automatically after a preset time without actuation.

16. The installation element according to one of the preceding claims, ***characterized in that*** it comprises a microswitch (76) and the outer housing comprises socket devices in the form of socket inserts (65) for a plug (75) and the plugging-in of a plug (75) into one of the socket inserts (65) opens the microswitch (76) and thus interrupts the control circuit of the electronic assembly, thus preventing the closure element (50) from closing when a plug (75) is plugged in.

17. The installation element according to claim 16, ***characterized in that*** unplugging the plug (75) from one of the socket inserts (65) closes the microswitch (76) and thus activates the control circuit of the electronic assembly and automatically closes the closure element (1) via the timer element without actuation.

18. The installation element according to one of the preceding claims, ***characterized in that*** the movement between the closure element and the electrical drive unit (5) is based on the operating principle of a threaded connection or a helix formation or a combination of a lifting magnet and a rotary magnet.

## Revendications

1. Elément d'installation pour connexions électriques comportant un boîtier de base (10), dans lequel plusieurs dispositifs de prise électrique sont agencés, et un boîtier externe (60), qui présente plusieurs ouvertures de passage, est fermement fixé sur le boîtier de base (10) et est fermé par le bas avec un fond de boîtier (70), dans lequel un mécanisme de verrouillage rotatif avec un verrou (1) est agencé entre le boîtier externe (60) et le boîtier de base (10), de sorte qu'en position fermée, les protubérances (7a, 7b) du verrou (1) définissent une surface plane à la surface du boîtier externe (60) et dans une position ouverte les ouvertures (61a, 61b) du boîtier externe (60) permettent un libre accès aux dispositifs de prise, et dans lequel une unité d'entraînement électrique (50) est disposée entre les dispositifs de prise, afin de faire coulisser les protubérances (7a, 7b) du verrou (1) linéairement de bas en haut dans les ouvertures (61a, 61b) du boîtier externe (60) et pour former une surface plane avec la surface du boîtier externe (60), ***caractérisé en ce qu'**un* signal de commande est généré par des éléments qui ne peuvent pas être actionnés mécaniquement et est envoyé à l'électronique de commande de l'unité d'entraînement, de sorte qu'une carte de circuit imprimé de moteur (54) alimente l'unité d'entraînement électrique lorsque le signal de commande est entré, de sorte que l'unité d'entraînement électrique (50) déplace le mécanisme de verrouillage linéairement et également en rotation lors de l'ouverture et du verrou de la serrure.

2. Elément d'installation selon la revendication 1, ***caractérisé en ce que*** l'unité d'entraînement (50) déplace le mécanisme de verrouillage d'abord linéairement puis en rotation pour ouvrir l'ouverture de passage et/ou le déplace en rotation d'abord puis linéairement pour fermer l'ouverture de passage.

3. Elément d'installation selon une des revendications précédentes, ***caractérisé en ce que*** l'unité d'entraînement (50) tend un ressort lors de l'ouverture du mécanisme de verrouillage, qui accompagne ou provoque le mouvement lors de la fermeture de l'orifice de passage et/ou tend un ressort lors de la fermeture du mécanisme de verrouillage, qui accompagne ou provoque le mouvement lors de l'ouverture de l'orifice de passage.

4. Elément d'installation selon une des revendications précédentes, ***caractérisé en ce que*** l'unité d'entraînement (50) comporte un électro-aimant qui déplace le mécanisme de verrouillage linéairement.

5. Elément d'installation selon une des revendications précédentes, ***caractérisé en ce que*** le boîtier externe (60) est raccordé de manière réversible au boîtier de base

6. Elément d'installation selon une des revendications précédentes, ***caractérisé en ce que*** le signal de commande est généré par une variation de champ électrique, en touchant simplement le boîtier externe (60), par une entrée acoustique, par un capteur de lumière et/ou via une connexion à une application de maison intelligente.

7. Elément d'installation selon une des revendications précédentes, ***caractérisé en ce que*** lorsqu'une fiche est insérée, le déclenchement de l'unité d'entraînement (50) est interrompu par un signal de commande.

8. Elément d'installation selon une des revendications précédentes, ***caractérisé en ce que*** le verrou (10) présente des surfaces de butée (2a, b) et des surfaces de guidage (3a, b) et le boîtier de base (10) présente des surfaces de butée (11a, b) et des nervures de guidage (14a, b) et lorsque le verrou (1) est ouvert, les surfaces de butée (2a, b) du verrou (1) effectuent un mouvement de translation vers le bas complémentaire aux surfaces de butée (11a, b) du boîtier de base (10) jusqu'à ce que les surfaces de guidage (3a, b) du verrou (1) puissent plonger sous les nervures de guidage (14a, b) du boîtier de base (10).

9. Elément d'installation selon la revendication 8, ***caractérisé en ce que*** lorsque le verrou (1) tourne, les surfaces de guidage (3a, b) du verrou (1) coulissent sous les nervures de guidage (14a, b) du boîtier de base (10).

10. Elément d'installation selon une des revendications 8 ou 9, ***caractérisé en ce que*** le verrou (1) présente une protubérance (7a, b) dont la hauteur est inférieure à l'épaisseur des nervures de guidage (14a, b) du boîtier de base (10).

11. Elément d'installation selon une des revendications 9 ou 10, ***caractérisé en ce que*** le boîtier de base (10) présente des nervures d'arrêt (13a, b) par lesquelles le mouvement de rotation du verrou (1) est limité lors de l'ouverture et/ou par lesquelles le mouvement de rotation du verrou (1) est limité lors de la fermeture.

12. Elément d'installation selon une des revendications précédentes, ***caractérisé en ce que*** le verrou (1) présente des surfaces de butée (4a, b) et des surfaces de guidage (3a, b) et le boîtier de base (10) présente des surfaces de butée (12a, b), et lors de la fermeture du verrou (1) les surfaces de butée (4a, b) du verrou (1) complémentaires aux surfaces de butée (12a, b) heuretent le boîtier de base (10) et le verrou (1) effectue un mouvement de translation vers le haut jusqu'à ce que les surfaces de guidage (3a, b) du verrou (1) heurtent le boîtier externe (60) à l'intérieur.

13. Elément d'installation selon une des revendications précédentes, ***caractérisé en ce que*** le boîtier de base (10) présente des trous traversants (16) et une carte de circuit imprimé de capteur (53), qui est disposée dans le boîtier de base (10) dans la zone de ces trous traversants (16) à l'extérieur du cercle effectif du verrou mobile (1) sont agencés.

14. Elément d'installation selon la revendication 13, ***caractérisé en ce que*** le boîtier externe (60) est métallique et est relié de manière électriquement conductrice à la carte de circuit imprimé de capteur (53).

15. Elément d'installation selon une des revendications précédentes, ***caractérisé en ce que*** le verrou (1) comporte un élément de temporisation électronique qui se referme automatiquement après un temps préréglé sans être actionné.

16. Elément d'installation selon une des revendications précédentes, ***caractérisé en ce qu**'il* comporte un micro-interrupteur (76) et le boîtier externe comporte des inserts de prise (65) pour une fiche (75) en tant que dispositifs de prise et l'enfichage d'une fiche (75) dans un des inserts de douille (65) ouvre le micro-interrupteur (76) et interrompt ainsi le circuit de commande de l'électronique et empêche ainsi le verrou (50) de se fermer lorsque la fiche (75) est enfichée.

17. Elément d'installation selon la revendication 16, ***caractérisé en ce que*** le fait de tirer la fiche (75) d'un des inserts de prise (65) ferme le micro-interrupteur (76) et active ainsi le circuit de commande de l'électronique et ferme automatiquement le verrou (1) via l'élément de temporisation sans actionnement.

18. Elément d'installation selon une des revendications précédentes, ***caractérisé en ce que*** le mouvement entre le verrou et l'unité d'entraînement électrique (5) est basé sur le principe actif d'un raccord fileté ou d'une formation en hélice ou d'une combinaison d'un aimant de levage et d'un aimant rotatif.
